# Europäisches Patentamt

# European Patent Office

# Office européen des brevets

(11) Veröffentlichungsnummer: **0 032 741**
**A1**

(12) ## EUROPÄISCHE PATENTANMELDUNG

(21) Anmeldenummer: **81100335.9**

(22) Anmeldetag: **17.01.81**

(51) Int. Cl.³: **H 04 Q 1/38,** H 04 Q 3/62

(30) Priorität: **17.01.80 DE 3001548**

(43) Veröffentlichungstag der Anmeldung: **29.07.81**
**Patentblatt 81/30**

(84) Benannte Vertragsstaaten: **AT BE CH FR GB IT LI LU NL SE**

(71) Anmelder: **Telefonbau und Normalzeit GmbH, Mainzer Landstrasse 128-146 Postfach 4432, D-6000 Frankfurt (Main) (DE)**

(72) Erfinder: **Siegmund, Reinhard, Ing. grad., Kelsterbacher Strasse 34-36, D-6000 Frankfurt (Main) (DE)**
Erfinder: **Vogt, Walter, Alte Frankfurter Strasse 23c, D-6368 Bad Vilbel (DE)**

(54) **Schaltungsanordnung zur Durchgabe von Signalen zu und von einer Teilnehmerstelle einer Fernsprechnebenstellenanlage.**

(57) Die Erfindung stellt eine Schaltungsanordnung vor, auf ein und derselben Signalader (c) mehrere Signale von einer Teilnehmerstelle (T), einer Fernsprechnebenstellenanlage zu einer zentralen Steuereinrichtung (ZSt) und umgekehrt zu übertragen. Dies geschieht von der Teilnehmerstelle aus zur zentralen Steuerung hin durch das Anschalten unterschiedliche Stromwerte bewirkender Lasten an die Signalader. Von der zentralen Steuereinrichtung aus zur Teilnehmerstelle hin werden Signale gegeben durch Anlegen unterschiedlicher Spannungswerte an die Signalader.

Telefonbau und Normalzeit GmbH, 6000 Frankfurt/Main
Mainzer Landstrasse  128 - 146

Schaltungsanordnung zur Durchgabe von Signalen zu
und von einer Teilnehmerstelle einer Fernsprechnebenstellenanlage

Die Erfindung betrifft eine Schaltungsanordnung zur
Durchgabe von Signalen zu und von einer Teilnehmerstelle einer Fernsprechnebenstellenanlage mit den
einzelnen Anschlußleitungen beigegebenen Signaladern
zur Übertragung von Signalen von der einzelnen Teilnehmerstelle zu einer zentralen Steuereinrichtung
bzw. umgekehrt von dieser zentralen Steuereinrichtung
zu einer Teilnehmerstelle.

In Fernsprechnebenstellenanlagen mit wenigen Teilnehmern ist es üblich, Signale von und zu Teilnehmerstellen über Signaladern zu geben, die neben den
Sprechadern geführt werden. Dabei wird für jedes Signal im allgemeinen eine eigenen Signalader benutzt,
so daß die Zahl der Adern, die zu einer Teilnehmerstelle geführt werden müssen, stark ansteigt. Dadurch
wird auch das Zuleitungskabel zu einem Apparat relativ dick und unhandlich. Es ist daher anzustreben,
die Zahl der erforderlichen Signaladern zu vermindern, indem über eine Leitung mehr als ein Signal
übertragen wird.

Wie eine derartige Aufgabe gelöst sein kann, geht aus der DE-OS 23 03 492 hervor. Hier werden über jeweils eine Leitung zwei Schaltbefehle übertragen und zwar so, daß jeweils ein Signal in der einen Richtung und ein Signal in der Gegenrichtung verläuft. Dazu sind Spannungen unterschiedlicher Polarität erforderlich, womit über stromrichtungsabhängige Schaltmittel die Signalwege getrennt werden können. Auf diese Art kann in jeder Richtung nur jeweils ein Signal übertragen werden. Immerhin kann damit der Leitungsaufwand auf die Hälfte reduziert werden. Darüber hinaus gehende Einsparungen sind mit dieser Anordnung nicht möglich.

Die Aufgabe der Erfindung besteht darin, eine Schaltungsanordnung anzugeben, die es ermöglicht, viele Signale über eine Signalader zu und von Teilnehmerstellen zu übertragen, so daß unter Umständen eine einzige Signalader pro Teilnehmerstelle genügt.

Diese Aufgabe wird dadurch gelöst, daß die über jeweils gleiche Ader gegebenen Signale der Teilnehmerstelle durch unterschiedliche Stromwerte, und die von der zentralen Steuereinrichtung gegebenen Signale durch unterschiedliche Spannungswerte gleicher Polarität unterschieden sind.

Mit dieser Schaltungsanordnung wird in vorteilhafter Weise erreicht, daß in jeder Richtung mehrere Signale gegeben werden können, die an jeder Empfangsstelle eindeutig unterscheidbar sind. Durch Weiterbildungen der Erfindung wird erreicht, daß die Auswirkungen gegebener Signale nicht zu fälschlichen Signalen in der Gegenrichtung führen können, und daß die Art der Signalgabe (dauernd, vorübergehend) keinen Einfluß auf die Schaltungsanordnung hat. Außerdem sind Verknüpfungen auch schon an der jeweiligen Sendestelle möglich, so daß es sich in Einzelfällen erübrigt, bestimmte Signale zu übertragen.

Ein Ausführungsbeispiel der Erfindung wird nachfolgend anhand von Zeichnungen näher erläutert.
Es zeigt:

Fig.1 die Beschaltung der Signalader c in vereinfachter Darstellung

Fig.2 die an der Teilnehmerstelle befindliche Schaltungsanordnung im Detail

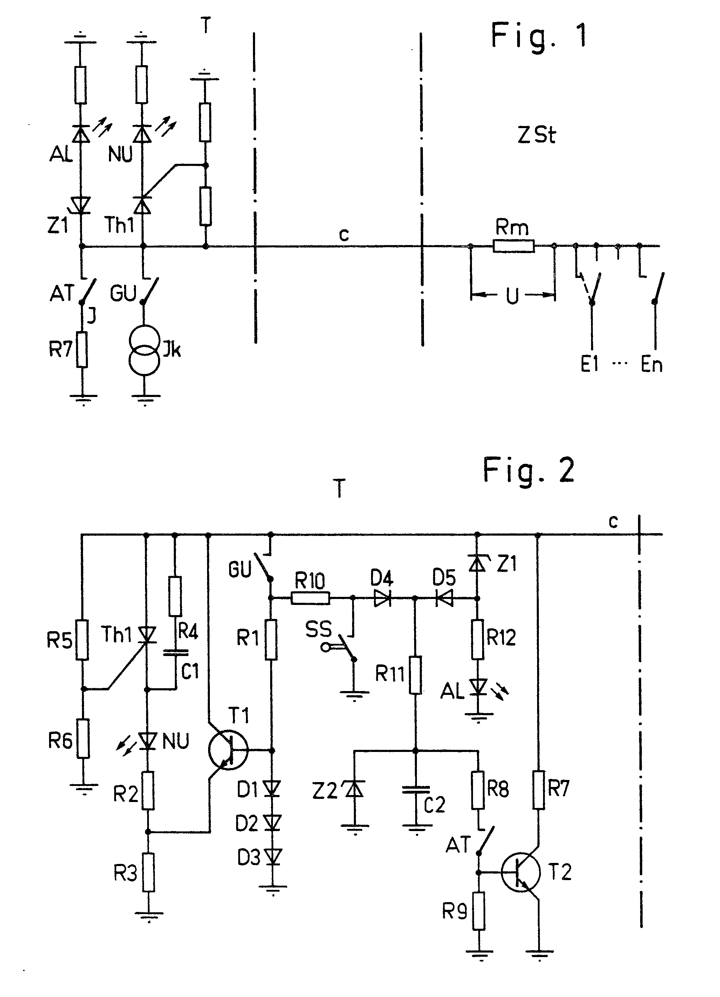

In der Fig.1 ist dargestellt, wie die zwischen der Teilnehmerstelle T und der zentralen Steuerung ZSt verlaufende Signalader c an beiden Enden mit Sende-und Empfangsschaltmitteln beschaltet ist. Die von der Teilnehmerstelle abgegebenen Signale bewirken einen unterschiedlichen Stromfluß auf der Signalader. Dadurch entsteht ein Spannungsabfall U am in der zentralen Steuereinrichtung befindlichen Meßwiderstand Rm. Dieser Spannungsabfall wird in nicht dargestellter Weise gemessen und zu Befehlsstrukturen für die Steuereinrichtung ausgebildet.

Das Senden von Signalen zur Teilnehmerstelle geschieht durch Anlegen unterschiedlich hoher Spannungen E1 bis En an die Signalader. Da die Einzelheiten dieser Anschaltung nicht näher erläutert werden müssen, sind lediglich Kontakte angedeutet. Im Ruhezustand der Schaltungsanordnung liegt eine erste Spannung E1 an der Leitung c. Dadurch ist es möglich, daß beim Schließen des Kontaktes GU ein durch die Konstantstromquelle Ik vorgegebener Strom über die Leitung c zur zentralen Steuereinrichtung fließt. Wird die Taste AT betätigt, so kommt zu diesem bereits erwähnten Strom ein weiterer Strom I hinzu, der durch die

Dimensicnierung des Widerstandes R7 gegeben ist.
Die durch diese Ströme verursachten unterschiedlichen
Spannungsabfälle am Meßwiderstand Rm werden bewertet
und   geben der Steuereinrichtung Auskunft darüber,
welche Signale von der Teilnehmerstelle abgegeben
wurden.

Die von der zentralen Steuereinrichtung durch Anlegen
unterschiedlicher Spannungen zur Teilnehmerstelle
gesendeten Signale bewirken beispielsweise die Aktivierung der Leuchtdiode AL über die Zehnerdiode Z1.
Dieses Signal kann dauernd oder in einem bestimmten
Rhythmus eingeschaltet werden. Durch einen kurzen,
die Ansprechschwelle des Thyristors    Th1 überschreitenden Spannungsimpuls wird der Thyristor Th1
gezündet und schaltet einen Strom für die Leuchtdiode
NU. Dieser Schaltzustand bleibt auch nach Verschwinden des Spannungsimpulses bestehen, so daß das gegebene Signal als Dauerinformation bestehen bleibt.

Anhand der Fig.2 werden nun praktische Funktionsbeispiele im Detail erläutert. Wenn an der Teilnehmerstelle
der Handapparat abgenommen wird, so wird Kontakt GU
geschlossen. Der Transistor T1 erhält dadurch Steuerstrom und schaltet über seine Emitter-Kollektor-Strecke
und den Widerstand R3 einen vorgegebenen Konstantstrom auf die Signalader c. Der dadurch vorgegebene,
definierte Spannungsabfall am Meßwiderstand in der
zentralen Steuerung besagt, daß die Teilnehmerstelle
sprechbereit ist. Es sei nun angenommen, daß der Teilnehmer durch Betätigen der Taste AT den Wunsch äußert,
mit einer externen Leitung (Amtsleitung) verbunden zu
werden. Dann erhält der Transistor T2
über die Signalader, den Kontakt GU, den Widerstand R10,
die Diode D4, die Widerstände R11 und R8, den Tastenkontakt AT und den Widerstand R9 Steuerstrom. Der Transistor T2 schaltet einen durch den Widerstand R7 vorgegebenen Strom auf die Signalader c. Dieser Strom addiert sich zu dem bereits fließenden Konstantstrom, der durch das Schließen des Gabelumschaltkontaktes GU verursacht wurde, und bewirkt einen erhöhten Spannungsabfall am Meßwiderstand in der zentralen Steuereinrichtung. Auf diese Weise wird erkannt, daß der Teilnehmer die Taste AT betätigt hat, und es wird eine daraus resultierende Schaltmaßnahme in nicht dargestellter Weise durchgeführt.

Der Belegtzustand einer Externleitung wird durch das Einschalten der Leuchtdiode AL bei der Teilnehmerstelle auf folgende Weise angezeigt. Die Steuereinrichtung legt zu diesem Zweck eine über dem Pegel der vorher angelegten Spannung E1 liegende Spannung an die Signalader c. Bei der Teilnehmerstelle wird dadurch die Durchschalteschwelle der Zenerdiode Z1 überschritten, wodurch über die Leuchtdiode AL, den Widerstand R12 und die Zenerdiode ein zur Einschaltung der Leuchtdiode ausreichender Strom über die Signalader fließt.

An dieser Stelle der Schaltungsanordnung ist eine weitere Verknüpfung angebracht, die folgendes bewirkt. Mit einem durch ein Sperrschloß betätigbaren Kontakt SS kann verhindert werden, daß sich das Betätigen der Taste AT zur Steuerungseinrichtung hin auswirkt. Es wird damit verhindert, daß von dieser Teilnehmerstelle aus gebührenpflichtige Externgespräche geführt werden können, wenn das Sperrschloß betätigt ist. In diesem Falle legt der Kontakt des Sperrschlosses SS Nullpotential an den vorher beschriebenen Steuerstromkreis für den Transistor T2, so daß dieser beim Betätigen der Taste AT nicht durchschalten kann. Es gelangt somit kein höherer Strom auf die Signalader c, und die Steuereinrichtung nimmt deshalb das Betätigen der Taste AT nicht wahr.

Damit aber ankommende Gespräche oder von anderen Teilnehmerstellen aus aufgebaute Gespräche (Rückfrage, Umlegen) entgegengenommen werden können, ist die Funktion der Taste AT wirksam, wenn vorher die Leuchtdiode AL eingeschaltet ist. Die Wirkung des Sperrschloßkontaktes SS wird aufgehoben, weil mit dem Durchschalten der Zenerdiode Z1 ein Stromfluß ermöglicht wird, der auf folgendem Weg verläuft. Der Transistor erhält also Steuerstrom über die Signalader c, die Zenerdiode Z1, die Diode D5, die Widerstände R11 und R8, die betätigte Taste AT und den Widerstand R9. Der Transistor T2 schaltet daraufhin durch und bewirkt in der zentralen Steuereinrichtung die bereits beschriebene Schaltmaßnahme, nämlich das Verbinden der Teilnehmerstelle mit der betreffenden externen Leitung.

Ein weiteres Signal, das von der zentralen Steuereinrichtung bei der Teilnehmerstelle eingeschaltet werden kann, ist das Aufleuchten der Leuchtdiode NU. Dieses Signal zeigt in diesem Beispiel an, daß die Anlage auf Nachtbetrieb umgeschaltet ist. Durch einen von der zentralen Steuereinrichtung abgegebenen Spannungsimpuls wird der Thyristor Th1 gezündet. Der Spannungsimpuls muß so bemessen sein, daß an dem durch die Widerstände R5 und R6 gebildeten Spannungsteiler eine ausreichende Zündspannung entsteht. Beim Durchschalten des Thyristors Th1 entsteht ein Stromkreis, der über die Widerstände R3 und R2, die Leuchtdiode NU und den Thyristor zur Signalader verläuft. Weil dieses Anzeigemittel (NU) sowohl bei geöffnetem als auch bei geschlossenem Gabelumschaltekontakt GU eingeschaltet werden muß, ist die durch den Kontakt GU aktivierte Konstantstromquelle mit dem Stromkreis für die Leuchtdiode verknüpft. Wenn also der Kontakt GU geschlossen wird und die Anzeige-Leuchtdiode NU bereits eingeschaltet ist, so wird der durch den Transistor T1 vorgegebene Konstantstrom so gedrosselt, daß noch genügend Strom über die Leuchtdiode fließt. Der Ge-samtstrom, der auf der Signalleitung fließt, setzt sich also zusammen aus dem Strom, der über die Leuchtdiode fließt und dem Strom, der über den Transistor T1 fließt. Auch beim umgekehrten Fall, wenn nämlich die Leuchtdiode zugeschaltet wird, und der Gabelumschaltekontakt GU bereits geschlossen ist, erhöht sich der Strom auf der Signalader c nicht.

Mit diesem Detail in der Schaltungsanordnung wird bewirkt, daß keine Stromänderungen auf der Signal-leitung entstehen können, wenn innerhalb der Teilnehmer-stelle das Signal GU gegeben wird und das Anzeigemittel NU aus-oder eingeschaltet wird.

P 3556
Gö/sch
7.1.1980

Telefonbau und Normalzeit GmbH, 6000 Frankfurt/Main
Mainzer Landstrasse  128 - 146


Schaltungsanordnung zur Durchgabe von Signalen zu
und von einer Teilnehmerstelle einer Fernsprechnebenstellenanlage


P a t e n t a n s p r ü c h e :

1. Schaltungsanordnung zur Durchgabe von Signalen
zu und von einer Teilnehmerstelle einer Fernsprechnebenstellenanlage mit den einzelnen Anschlußleitungen beigegebenen Signaladern zur Übertragung
von Signalen von der einzelnen Teilnehmerstelle
zu einer zentralen Steuereinrichtung bzw. umgekehrt von dieser zentralen Steuereinrichtung zu
einer Teilnehmerstelle,
dadurch gekennzeichnet,
daß die über die jeweils gleiche Ader (c) gegebenen Signale der Teilnehmerstelle (T) durch unterschiedliche Stromwerte (I,Ik) und die von der zentralen Steuereinrichtung (ZSt) gegebenen Signale
durch unterschiedliche Spannungswerte (E1 bis En)
gleicher Polarität unterschieden sind.


2. Schaltungsanordnung nach Anspruch 1,
dadurch gekennzeichnet,
daß mindestens ein von der Teilnehmerstelle abgegebenes Signal durch die Anschaltung einer Konstantstromquelle (T1) an die Signalader (c) gebildet wird.

3. Schaltungsanordnung nach Anspruch 2,
dadurch gekennzeichnet,
daß der ein Signal darstellende Konstantstrom auch
dann auf dem gleichen Wert bleibt, wenn durch Signalgabe von der Steuereinrichtung eine Belastung
darstellende Anzeigemittel (NU) eingeschaltet werden.

4. Schaltungsanordnung nach Anspruch 1,
dadurch gekennzeichnet,
daß die Abgabe eines weiteren Signales durch die
Anschaltung einer zusätzlichen Last (R7) an die
Signalader parallel zur Konstantstromquelle erfolgt.

5. Schaltungsanordnung nach Anspruch 3,
dadurch gekennzeichnet,
daß die Abgabe des weiteren Signals durch die vorübergehende Betätigung einer Taste (AT) bewirkt
wird.

6. Schaltungsanordnung nach den Ansprüchen 1 bis 4,
dadurch gekennzeichnet,
daß die von der Teilnehmerstelle abgegebenen Signale durch Messung des Spannungsabfalles (U) an
einem in der Signalader (c) angeordneten Widerstand (Rm) in der zentralen Steuereinrichtung erkannt werden, wobei die jeweils an die Signalader
angelegte Spannung berücksichtigt wird.

7. Schaltungsanordnung nach Anspruch 1,
dadurch gekennzeichnet,
daß die Signalgabe (AL) von der Steuereinrichtung
(ZSt) zur Teilnehmerstelle (T) durch Anlegen einer
über dem Pegel einer den Ruhezustand kennzeichnenden Spannung liegenden Spannung für die gesamte
Dauer des Signales erfolgt.

8. Schaltungsanordnung nach Anspruch 1,
dadurch gekennzeichnet,
daß mit einem einmaligen Impuls höheren Potentials ein das Signal (NU) speicherndes Schaltmittel (Th1) eingeschaltet wird, womit das Signal auch bei nachfolgend niedrigerem Potential aufrecht erhalten bleibt.

9. Schaltungsanordnung nach Anspruch 7,
dadurch gekennzeichnet,
daß das ein Signal speichernde Schaltmittel (Th1) durch eine kurzzeitige Unterbrechung der Signalader (c) von der zentralen Steuereinrichtung aus abgeschaltet wird.

10. Schaltungsanordnung nach Anspruch 5,
dadurch gekennzeichnet,
daß durch einen von einem Sperrschloß betätigbaren Kontakt (SS) die Abgabe eines Signales (AT) von der Teilnehmerstelle verhindert wird, indem Sperrpotential an einen die zusätzliche Last (R7) schaltenden Transistor (T2) gelegt wird.

11. Schaltungsanordnung nach Anspruch 9,
dadurch gekennzeichnet,
daß die Sperrwirkung des Kontaktes (SS) aufgehoben ist, wenn von der Steuereinrichtung ein bestimmtes Signal (AL) eingeschaltet ist, und deshalb mit höherem Potential die Durchschaltung des Transistors (T2) möglich ist.

12. Schaltungsanordnung nach den Ansprüchen 5 und 10,
dadurch gekennzeichnet,
daß die Wirkung des Signales (AL) für die Durchschaltung des Transistors (T2) auch in den Signalpausen bei flackernder Einschaltung erhalten bleibt,

0032741

indem die Ladung eines Kondensators (C1) die Durchschaltung des Transistors (T2) ermöglicht, wenn mit
einer Taste (AT) das betreffende Signal gegeben
wird.

P 3556
Gö/sch
7.1.1980

## Fig. 1

## Fig. 2

| Kategorie | Kennzeichnung des Dokuments mit Angabe, soweit erforderlich, der maßgeblichen Teile | betrifft Anspruch | KLASSIFIKATION DER ANMELDUNG (Int Cl ) |
|---|---|---|---|
| | **EINSCHLÄGIGE DOKUMENTE** | | |
| | <u>NL - A - 78 10400</u> (SIEMENS ALBIS)<br><br>* Seite 2, Zeile 23 - Seite 6, Zeile 37 *<br><br>-- | 1,7 | H 04 Q 1/38<br>3/62 |
| | <u>DE - B - 1 243 737</u> (TELEFONBAU UND NORMALZEIT)<br><br>* Spalte 1, Zeile 26 - Spalte 3, Zeile 42 *<br><br>-- | 1,2,6 | |
| | <u>GB - A - 1 437 032</u> (PLESSEY)<br><br>* Seite 1, Zeile 86 - Seite 2, Zeile 104 *<br><br>-- | 1 | RECHERCHIERTE SACHGEBIETE (Int Cl )<br><br>H 04 Q 1/38 |
| A | COMMUTATION & ELECTRONIQUE, Nr. 36, Januar 1972, Seiten 70-85 Paris, Fr.<br>F. DUPRE et al.: "Adaptation des centraux Rotary et Pentaconta du réseau de Paris au système de modulation par impulsions et codage (MIC) 32 voies"<br><br>* Seite 71, linke Spalte, Zeile 1 - Seite 81, rechte Spalte, Zeile 19 *<br><br>-- | 1 | |
| A | <u>US - A - 3 886 315</u> (LEE)<br><br>* Spalte 4, Zeile 51 - Spalte 6, Zeile 38 *<br><br>---- | 1 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 23-04-1981 | VERSLYPE |

EPA form 1503.1   06.78